# FASCICULE DE BREVET EUROPEEN

(11) **EP 0 559 542 B1**
(45) Date de publication et mention de la délivrance du brevet: **24.04.1996**
(21) Numéro de dépôt: 93400519.0
(22) Date de dépôt: 01.03.1993
(51) Int. Cl.: F16D 3/38, F16D 1/08

(54) **Accouplement monobloc**
Kupplung aus einem Stück
One piece coupling

(30) Priorité: 05.03.1992 FR 9202670
(43) Date de publication de la demande: 08.09.1993
(73) Titulaire: NACAM, F-41100 Vendôme (FR)
(72) Inventeur: Fevre, Laurent, F-28230 Epernon (FR)
(74) Mandataire: Michelet, Alain

(56) Documents cités:
- DE-A- 1 450 122
- FR-A- 2 181 318
- FR-A- 2 448 068
- FR-A- 2 649 375

## Description

La présente invention se rapporte à des accouplements monoblocs raccordés d'une part à un organe transmetteur de couple, et d'autre part à un organe récepteur, et elle concerne plus spécialement des accouplements obtenus à partir d'une tôle sous forme de flan ou de tronçon de tube du type joint de cardan.

On connaît des accouplements monoblocs du type joint de cardan obtenus à partir d'un seul élément de tôle, tel que celui décrit dans le brevet français n° 1.515.051.

Le brevet français 2.458.002 au nom de la Demanderesse se rapporte un joint de cardan obtenu à partir d'un flan de tôle. Il possède un moyeu ouvert avec des orifices renforcés pour le passage de son moyen de fixation. Ce type d'accouplement ne permet pas d'absorber les efforts relativement importants, qui peuvent se manifester dans certaines applications.

Il est connu par le brevet français n°2.448.068, considéré constituer l'état de la technique correspondant au préambule de la revendication 1 annexée, un joint de cardan réalisé par découpage et roulage à froid d'un flan de tôle, et comportant une mâchoire matérialisée par deux branches rattachées à un moyeu fendu. Selon ce document, le moyeu fendu a deux rebords longitudinaux qui doivent être rigoureusement en vis-à-vis, de manière que leurs profils puisse pénétrer l'un dans l'autre en vue de résister à des efforts tendant à déformer ce moyeu. Le moyeu étant relativement ramassé, la nécessité d'obtenir des rebords longitudinaux se faisant face l'un par rapport à l'autre nécessite des moyens d'obtention spécifiques avec une réalisation délicate et un niveau de qualité aléatoire. Ces difficultés de réalisation entraînent une augmentation du prix de revient et un niveau de qualité qui n'est pas constant, ce qui est particulièrement gênant dans la fabrication en très grande série de l'industrie automobile.

Le but de la présente invention, telle que définie dans les revendications annexées, est d'éviter les inconvénients mentionnés ci-dessus, et de proposer un accouplement monobloc obtenu à partir d'une tôle notamment sous forme de flan ou de tronçon de tube raccordé d'une part à un organe transmetteur de couple, et d'autre part à un organe récepteur. Cet accouplement a un moyeu fendu dont les deux rebords longitudinaux sont agencés de manière à absorber les efforts tendant à déformer cet accouplement, tout en permettant une réalisation particulièrement aisée avec un niveau de qualité constant, et une tenue correcte aux efforts tendant à déformer cet accouplement, que cet accouplement soit relativement ramassé ou relativement long dans le sens axial du fait des différentes architectures dans lesquelles cet accouplement est utilisé.

Selon un mode de réalisation de l'invention, l'accouplement monobloc est obtenu à partir d'une tôle, notamment sous forme de flan ou de tronçon tube, et est raccordé d'une part à un organe transmetteur de couple, et d'autre part à un organe récepteur. Cet accouplement est constitué de trois zones dans le sens axial : une zone de liaison avec l'organe transmetteur de couple, une zone intermédiaire, et une zone de liaison avec l'organe récepteur. La zone de liaison avec l'organe transmetteur de couple est constituée par un moyeu fendu axialement, qui est assujetti à l'organe transmetteur de couple par un système de fixation. La zone intermédiaire est fendue axialement de manière à avoir deux pinces. Ces deux pinces ont chacune un rebord longitudinal, et ces deux rebords longitudinaux présentent des profils complémentaires, qui coopèrent par emboîtement en vue d'absorber les efforts tendant à déformer cet accouplement. L'emboîtement s'opère par la pénétration de l'un des rebords sur le côté de l'autre rebord et réciproquement. L'angle des deux pinces l'une par rapport à l'autre est déterminé de manière que cette pénétration puisse se réaliser en vue d'assurer un emboîtement correct. La zone de liaison avec l'organe récepteur est constituée par au moins une branche de liaison ou de fixation.

Avantageusement, la zone intermédiaire a une section de forme sensiblement circulaire qui se prolonge à peu près tangentiellement de chaque côté par une partie sensiblement plane de façon à constituer la pince correspondante. De plus, les deux pinces sont approximativement perpendiculaires l'une par rapport à l'autre.

Afin de bien séparer la première zone de liaison avec la zone intermédiaire, les deux pinces sont désolidarisées du moyeu fendu au moyen d'une ouverture, qui est disposée dans le prolongement de la fente du moyeu.

Préférentiellement selon l'invention, chacun des rebords longitudinaux des deux pinces comporte au moins une protubérance ou tenon, qui pénètre dans une échancrure ou mortaise de forme complémentaire qui est aménagée dans le rebord longitudinal de l'autre pince.

Selon l'invention, le moyeu fendu qui constitue la première zone de liaison est muni de deux ailes disposées de part et d'autre de la fente longitudinale du moyeu. Chacune de ces ailes a un orifice qui a le même axe, afin de matérialiser l'axe du montage du système de fixation avec l'organe transmetteur de couple. Selon une variante de l'invention, ce système de fixation est constitué par un boulon de serrage. De plus, le moyeu fendu est positionné et solidarisé en rotation avec l'organe transmetteur de couple au moyen de cannelures.

Afin d'obtenir une mâchoire de joint de cardan qui s'applique notamment dans les directions de véhicules automobiles, la zone de liaison avec l'organe récepteur est constituée par deux branches qui sont disposées symétriquement par rapport à l'axe longitudinal, c'est-à-dire par rapport à l'axe de rotation.

Dans un autre type d'application selon l'invention, la zone de liaison avec l'organe récepteur est constituée par au moins une patte de fixation, qui est disposée dans un plan sensiblement perpendiculaire à l'axe longitudinal, c'est-à-dire à l'axe de rotation.

L'accouplement monobloc selon l'invention, offre ainsi l'avantage de séparer sa structure en trois zones, dont la structure de la zone intermédiaire selon l'invention permet de bien résister aux efforts tendant à déformer ce moyeu. De plus, la présence de cette zone intermédiaire permet d'adapter ce type d'accouplement à toutes les architectures d'application, et notamment aux applications relativement allongées dans le sens axial. Enfin, la structure particulière de cette zone intermédiaire, et le mode de coopération des deux pinces l'une par rapport à l'autre, permet d'obtenir une réalisation industrielle particulièrement facile et donc d'un prix de revient très bas tout en permettant un niveau de qualité constant.

D'autres avantages ressortiront de l'invention, qui sera mieux comprise à l'aide de la description donnée ci-dessous d'exemples particuliers de réalisation, décrits à titre non limitatif en référence aux dessins annexés sur lesquels :
- la figure 1 représente en perspective un accouplement du type mâchoire de joint de cardan selon l'invention ;
- la figure 2 est une demi-coupe axiale au-dessus de l'axe, et une demi-vue extérieure au dessous de l'axe de l'accouplement représenté sur la figure 1 ;
- la figure 3 est une coupe suivant III-III de la figure 2 ;
- la figure 4 est une coupe suivant IV-IV de la figure 2 ;
- la figure 5 est une coupe suivant V-V de la figure 2 ;
- la figure 6 représente en perspective un autre mode de réalisation de l'accouplement suivant l'invention.

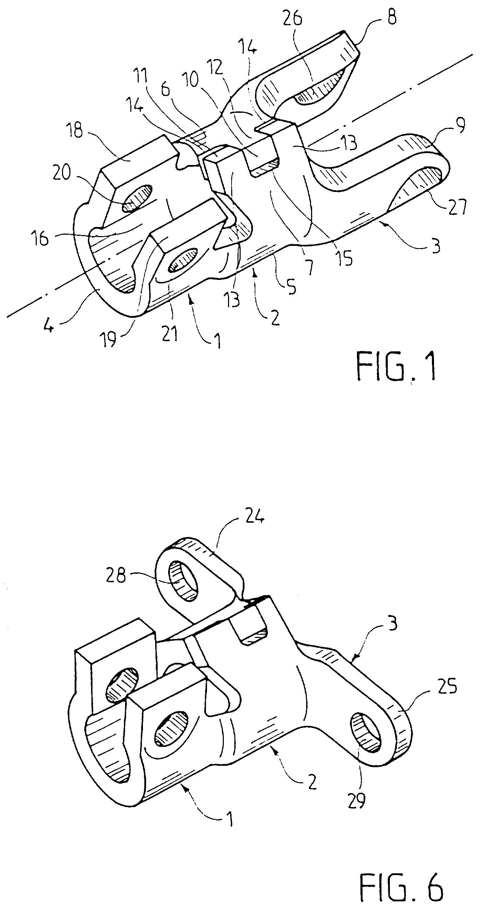

La figure 1 représente en perspective un mode de réalisation selon l'invention d'un accouplement monobloc obtenu à partir d'une tôle, notamment sous forme de flan, de tronçon de tube ou de fers plats qui sont découpés et mis en forme. Cet accouplement est raccordé d'une part à un organe transmetteur tel qu'un arbre non figuré sur les dessins, et d'autre part à un organe récepteur.

L'accouplement monobloc comprend trois zones réparties dans le sens axial :
- une zone 1 de liaison avec l'organe transmetteur de couple,
- une zone 2 intermédiaire fendue axialement et,
- une zone 3 de liaison avec l'organe récepteur.

La zone 1 de liaison avec l'organe transmetteur de couple est constituée par un moyeu fendu 4. La fente de ce moyeu 4 est disposée suivant le sens axial, de manière qu'il puisse être assujetti à l'organe transmetteur de couple, c'est-à-dire à l'arbre transmetteur de couple par un système de fixation, qui vient bloquer ce moyeu fendu 4 sur l'arbre.

La zone 2 intermédiaire est disposée dans le prolongement axial du moyeu fendu 4, et elle est également fendue dans le sens axial de façon à avoir deux pinces référencées 6 et 7. La pince 6 a un rebord longitudinal 10, et la pince 7 a également un rebord longitudinal 11, qui présente l'un et l'autre des profils complémentaires, de façon à coopérer en s'emboîtant l'un dans l'autre afin d' absorber les efforts tendant à déformer l'accouplement. Selon une des caractéristiques essentielles de l'invention, la pénétration des rebords 10 et 11 l'un dans l'autre se fait de façon que l'un des rebords pénètre sur le côté de l'autre rebord et réciproquement. Dans cette structure, les deux pinces 6 et 7 font un angle l'une par rapport à l'autre, qui est déterminé de manière que la pénétration puisse se réaliser en vue d'assurer un emboîtement correct.

La zone de liaison 3 avec l'organe récepteur, est raccordée dans le prolongement axial de la zone intermédiaire, et elle est essentiellement constituée par des branches de liaison, comme c'est le cas représenté sur la figure 1, où dans un autre mode de réalisation de l'invention elle est constituée par deux pattes de fixation comme cela est représenté sur la figure 6.

La zone 1 de liaison avec l'organe ou arbre transmetteur de couple est constituée par le moyeu fendu 4 comportant une portion de forme complémentaire à celle de l'arbre transmetteur de couple, qui se termine à chacune de ses extrémités par une aile référencée 18 et 19, qui sont situées de part et d'autre de la fente longitudinale 16 sensiblement parallèle à l'axe longitudinal de l'accouplement, c'est-à-dire à son axe de rotation. Chacune des ailes 18 et 19 possède un orifice référencé respectivement 20 et 21, qui ont le même axe l'un par rapport à l'autre afin de matérialiser l'axe de montage du système de fixation de ce moyeu fendu sur l'arbre transmetteur de couple. Le système de fixation est constitué par un boulon de serrage non représenté sur les figures. Afin d'améliorer encore l'assemblage de ce moyeu fendu 4 avec l'arbre transmetteur de couple, ce moyeu fendu 4 ainsi que l'arbre sont munis de cannelures 22, qui positionnent et rendent solidaire en rotation ce moyeu fendu 4 avec l'arbre transmetteur de couple.

La zone intermédiaire 2 est disposée dans le prolongement axial du moyeu fendu 4, avec lequel il est intégré de façon à constituer une pièce monobloc. Cette zone intermédiaire 2 est constituée par un corps 5 dont la section a une forme sensiblement circulaire, et qui se prolonge de chaque côté et tangentiellement par une partie sensiblement plane. Chacune de ces parties planes constitue l'une des deux pinces référencées 6 et 7, qui, dans le mode de réalisation représenté sur les figures, sont approximativement perpendiculaires l'une par rapport à l'autre.

Cette zone intermédiaire 2 est une des caractéristiques et un des avantages déterminants de l'invention, car elle permet d'une part de s'adapter aux différentes conditions d'architectures sur lesquelles l'accouplement doit être appliqué, et notamment les conditions de longueur dans le sens axial, et d'autre part cette zone intermédiaire a un rôle supplémentaire qui consiste à absorber les efforts tendant à déformer cet accouplement au moyen des profils complémentaires aménagés sur chacun des deux rebords longitudinaux 10 et 11 de chacune des deux pinces 6 et 7. Selon l'invention, le rebord longitudinal 10 de la pince 6 a au moins une protubérance ou tenon 12 qui pénètre dans une échancrure ou mortaise 15 aménagée dans le rebord longitudinal 11 de la pince 7. De la même façon, la pince 7 comporte au moins une protubérance ou tenon 13, qui pénètre dans une échancrure ou mortaise 14 aménagée dans le rebord longitudinal 10 de la pince 6. Ces protubérances et ces échancrures ont des profils et des dimensions, qui sont prévues de manière à avoir des formes complémentaires les unes par rapport aux autres, de façon à pouvoir encaisser les différents efforts tendant à déformer l'accouplement.

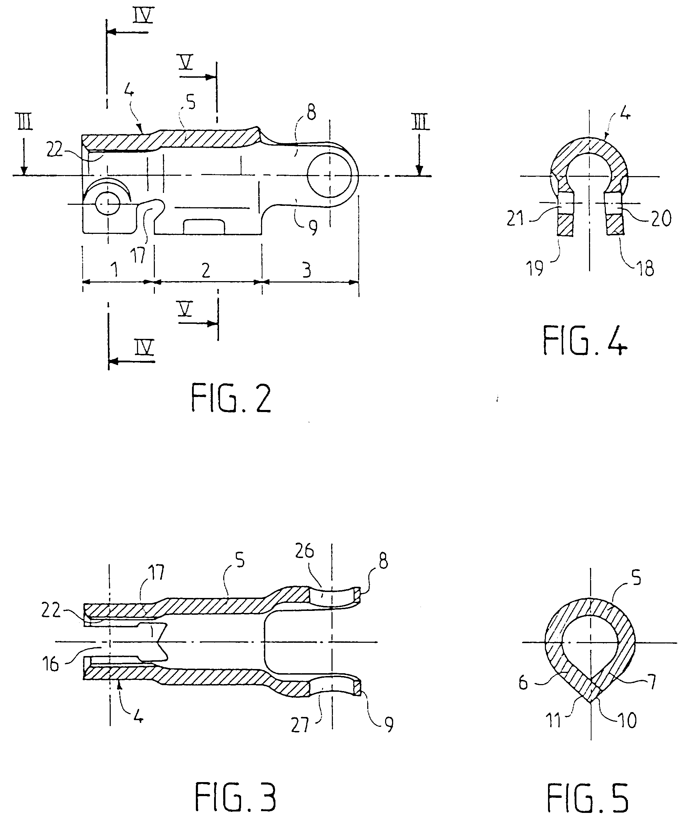

Afin que les deux pinces 6 et 7 puissent être mises en forme convenablement, et dans le but de séparer la zone intermédiaire 2 du moyeu fendu 4, il est aménagé entre la zone de liaison 1 et la zone intermédiaire 2 une ouverture 17 disposée entre l'aile 18 du moyeu fendu 4 et la pince 6 de la zone intermédiaire 2, et une autre ouverture 17 qui est disposée entre l'aile 19 du moyeu fendu 4 et la pince 7 de la zone intermédiaire. Ces deux ouvertures 17 sont ainsi disposées dans le prolongement de la fente 16 du moyeu 4. Les pinces 6 et 7 peuvent ainsi, par leur emboîtement, encaisser les différents efforts tendant à déformer l'accouplement, tout en permettant au moyeu fendu 4 de rester correctement fixé sur l'arbre transmetteur de couple comme cela est détaillé sur les différentes figures 2 à 5.

La zone de liaison 3 avec l'organe récepteur est constituée dans le mode de réalisation représenté sur la figure 1 par deux branches référencées 8 et 9, qui sont disposées symétriquement par rapport à l'axe longitudinal de l'accouplement, c'est-à-dire par rapport à l'axe de rotation. Ces deux branches 8 et 9 sont raccordées et intégrées à la zone intermédiaire 2, et elles constituent une mâchoire de joint de cardan. Elles possèdent un trou référencé respectivement 26 et 27.

Dans un autre mode de réalisation représenté sur la figure 6, la zone de liaison 3 avec l'organe récepteur est constituée par deux pattes de fixation référencées 24 et 25 qui sont disposées dans un plan sensiblement perpendiculaire à l'axe longitudinal, c'est-à-dire à l'axe de rotation de l'accouplement. Ces deux pattes 24 et 25 sont raccordées et intégrées à la zone intermédiaire 2 et elles sont munies d'un trou référencé respectivement 28 et 29.

Le type d'accouplement selon l'invention représenté sur les figures 1 à 5 concerne plus particulièrement une mâchoire de joint de cardan de direction de véhicule automobile.

## Revendications

1. Accouplement monobloc, obtenu à partir d'une tôle, notamment sous forme de flan ou de tronçon de tube, raccordable d'une part à un organe transmetteur de couple et d'autre part à un organe récepteur, caractérisé en ce que ledit accouplement est constitué de trois zones dans le sens axial:
- une zone (1) de liaison avec l'organe transmetteur de couple constitué par un moyen fendu (4) susceptible d'être axialement assujetti à l'organe transmetteur de couple par un système de fixation;
- une zone intermédiaire (2) fendue axialement de manière à avoir deux pinces (6) et (7) dont les deux rebords longitudinaux (10) et (11) présentent des profils complémentaires qui coopèrent par emboîtement en vue d'absorber les efforts tendant à déformer ledit accouplement, cet emboîtement s'opérant par la pénétration de l'un des rebords sur le côté de l'autre rebord et réciproquement, les deux pinces (6) et (7) étant situées dans des plans sécants différents relativement l'une à l'autre, l'angle des deux pinces (6) et (7) l'une par rapport à l'autre étant déterminé de manière que cette pénétration puisse se réaliser en vue d'assurer un emboîtement correct;
- une zone (3) de liaison avec l'organe récepteur constituée par au moins une branche de liaison ou de fixation.

2. Accouplement selon la revendication 1, caractérisé en ce que la zone intermédiaire (2) a une section de forme sensiblement circulaire, qui se prolonge à peu près tangentiellement de chaque côté par une partie sensiblement plane de façon à constituer les deux pinces (6) et (7) approximativement perpendiculaire l'une par rapport à l'autre.

3. Accouplement selon l'une des revendications 1 et 2, caractérisé en ce que les deux pinces (6) et (7) sont désolidarisées du moyeu fendu (4) au moyen de deux ouvertures (17) disposées de part et d'autre et dans le prolongement de la fente (16) du moyeu (4) afin de séparer la zone intermédiaire (2) du moyeu fendu (4).

4. Accouplement selon l'une quelconque des revendications précédentes, caractérisé en ce que le rebord (10, 11) longitudinal de l'une des pinces (6, 7) comporte au moins une protubérance (12, 13) qui pénètre dans une échancrure (14, 15) de forme complémentaire aménagée dans le rebord longitudinal (10, 11) de l'autre pince (6, 7).

5. Accouplement selon l'une quelconque des revendications précédentes, caractérisé en ce que le moyeu fendu (4) est muni de deux ailes (18 et 19) de part et d'autre de la fente (16) longitudinale, chacune de ces ailes (18, 19) ayant un orifice (20, 21) avec le même axe afin de permettre le montage du système de fixation dudit accouplement sur l'organe transmetteur de couple, ledit système de fixation étant constitué par un boulon de serrage.

6. Accouplement selon l'une quelconque des revendications précédentes, caractérisé en ce que le moyeu fendu (4) comporte des cannelures (22) pour le positionnement et la solidarisation en rotation dudit moyen avec l'organe transmetteur de couple.

7. Accouplement selon l'une quelconque des revendications précédentes, caractérisé en ce que la zone de liaison (3) avec l'organe récepteur est constituée par deux branches (8, 9) disposées symétriquement par rapport à l'axe longitudinal, c'est-à-dire l'axe de rotation, de manière à réaliser une mâchoire de joint de cardan.

8. Accouplement selon l'une quelconque des revendications 1 à 6, caractérisé en ce que la zone de liaison (3) avec l'organe récepteur est constituée par au moins une patte de fixation (24, 25) disposée dans un plan sensiblement perpendiculaire à l'axe longitudinal, c'est-à-dire à l'axe de rotation.

9. Utilisation d'un accouplement selon l'une quelconque des revendications précédentes, en tant que mâchoire de joint de cardan de direction de véhicule automobile.

## Patentansprüche

1. Einstückige Kupplung erhalten mittels eines Bleches insbesondere in Form einer Scheibe oder eines Rohrstummels verbunden zum einen mit einem Momentenübertragungsorgan und zum anderen mit einem Aufnahmeorgan dadurch gekennzeichnet , daß die besagte Kupplung aus drei Zonen in axialer Richtung gebildet ist :
- eine Zone (1) zur Verbindung mit dem Momentenübertragungsorgan gebildet durch ein gespaltenes Element (4), das axial am Momentenübertragungsorgan durch ein Befestigungssystem angebracht ist;
- eine Zwischenzone (2), die axial zur Bildung zweier Zangenbacken (6) und (7) gespalten ist, deren beide Längsränder (10) und (11) komplementäre Profile darstellen, die durch ersichtliches Ineinanderfügen so zusammenwirken, daß die zur Verformung der besagten Kupplung neigenden Belastungen absorbiert werden, wobei sich dieses Ineinanderfügen durch die Penetration des einen der Ränder auf der Seite des anderen Randes und umgekehrt vollzieht, die zwei Zangenbacken (6) und (7) in den unterschiedlichen secanten Ebenen in Verhältnis zu einer mit anderer eingeordnet, und der Winkel der zwei Zangenbacken (6) und (7) bezogen aufeinander so festgelegt ist, daß sich diese Penetration so wollziehen kann, daß ersichtlich ein korrektes Ineinanderfügen gewährleistet ist;
- eine Zone (3) zur verbindung mit dem Aufnahmeorgan, das wenigstens durch einen Verbindungs- oder Befestigungsschenkel gebildet ist.

2. Kupplung nach Anspruch 1, dadurch gekennzeichnet, daß die Zwischenzone (2) einen Abschnitt mit im Wesentlichen runder Form aufweist, der fast tangential auf jeder Seite durch einen im Wesentlichen ebenen Teil derart verlängert ist, daß die beiden Zangenbacken (6) und (7) näherungsweise zueinander senkrecht verlaufen.

3. Kupplung nach einem der Ansprüche 1 und 2, dadurch gekennzeichnet, daß die Zangenbacken (6) und (7) vom gespaltenen Element (4) mittels zweier Öffnungen (17), die auf beiden Seiten und in der Verlängerung des Spaltes (16) des Elementes (4) angeordnet sind, um die Mittelzone (2) vom gespaltenen Element (4) zu trennen.

4. Kupplung nach einem der vorangehenden Ansprüche, dadurch gekennzeichnet, daß der Längsrand (10,11) von einem der Zangenbacken (6,7) wenigstens einen Vorsprung (12,13) aufweist, der in einen Ausschnitt (14,15) komplementärer Form einrückt, der im Längsrand (10,11) des anderen Zangenbackens (6,7) ausgebildet ist.

5. Kupplung nach einem der vorangehenden Ansprüche, dadurch gekennzeichnet, daß das gespaltene Element (4) mit zwei Flügelteilen (18,19) zu beiden Seiten des Längsspaltes (16) versehen ist, die jeweils eine Öffnung (20,21) mit übereinstimmender Achse aufweisen, um die Montage des Befestigungssystems mit dem Momentenübertragungsorgan zu ermöglichen, das durch einen Befestigungsbolzen gebildet ist.

6. Kupplung nach einem der vorangehenden Ansprüche, dadurch gekennzeichnet, daß das gespaltene Element positioniert und drehverbunden ist mit dem Momentenübertragungsorgan mittels Rinnen (22).

7. Kupplung nach einem der vorangehenden Ansprüche, dadurch gekennzeichnet, daß die Verbindungszone (3) mit dem Aufnahmeorgan durch zwei Schenkel (8,9) gebildet ist, die bezüglich der Längsachse, daß heißt der Rotationsachse symmetrisch angeordnet sind, derart, daß eine Backe eines Kardangelenkes realisiert wird.

8. Kupplung nach einem der Ansprüche 1-6, dadurch gekennzeichnet, daß die Verbindungszone (3) mit dem Aufnahmeorgan durch wenigstens eine Befestigungslasche (24,25) gebildet ist, die in einer Ebene im Wesentlichen senkrecht zur Längsachse, daß heißt zur Rotationsonsachse, angeordnet ist.

9. Kupplung nach einem der vorangehenden Ansprüche, dadurch gekennzeichnet, daß sie eine Kardangelenkbacke zur Steuerung eines Kraftfahrzeugs bildet.

## Claims

1. One-piece coupling obtained from a metal sheet particularly in the form of a bank truncated tube, connected, on the one hand, to a torque-transmitter member, and, on the other hand, to a receiver member, characterized in that the said coupling consists of three zones in the axial direction :
- a zone (1) for connection with the torque-transmitter member, the zone consisting of a slit means susceptible to be rigidly axially connected to the torque-transmitter member by a fixing system;
- an intermediate zone (2) slit axially so as to have two clamps (6) and (7), the two longitudinal rims (10) and (11) of which have complementary profiles which interact by encasing for the purpose of absorbing the forces which tend to deform the said coupling, this encasing working by the penetration of one of the rims onto the side of the other rim and vice versa, the two clamps (6) and (7) being located in the different secant planes relatively on to the other, the angle of the two clamps (6) and (7) with respect to one another being defined so that this penetration can take place for the purpose of providing a correct encasing.
- a zone (3) for connection with the receiver member which zone consists of at least one connection or fixing branch.

2. Coupling according to claim 1, characterized in that the intermediate zone (2) has a section of substantially circular shape, which extends more or less tangentially on each side by a substantially planar part so as to constitute the two clamps (6) and (7) which are approximately perpendicular whith respect to one another.

3. Coupling according to one of claims 1 and 2, characterized in that the two clamps (6) and (7) are detached from the slit hub (4) by means of two openings (17) arranged on either side and in the extension of the slit (16) in the hub (4) in order to separate the intermediate zone (2) from the split hub (4).

4. Coupling according to any one of the preceding claims, characterized in that the longitudinal rim (10, 11) of one of the clamps (6, 7) includes at least one protuberance (12, 13) which penetrates into a notch (14, 15) of complementary shape formed in the longitudinal rim (10, 11) of the other clamp (6, 7).

5. Coupling according to any one of the preceding claims, characterized in that the split hub (4) is provided with two flanges (18 and 19) on either side of the longitudinal split (16), each of these flanges (18, 19) having an orifice (20, 21) with the same axis in order to allow the fixing system to be mounted on the torque-transmitter member, which consists of a clamping bolt.

6. Coupling according to any one of the preceding claims, characterized in that the split hub (4) is positioned and rotationally secured on the torque-transmitter member by means of splines (22).

7. Coupling according to any one of the preceding claims, characterized in that the zone (3) for connection to the receiver member consists of two branches (8, 9) arranged symmetrically with respect to the longitudinal axis, that is to say the axis of rotation, so as to produce one jaw of a universal joint.

8. Coupling according to any one of the claims 1 to 6, characterized in that the zone (3) for connection to the receiver member consists of at least one fixing lug (24, 25) arranged in a plane which is substantially perpendicular to the longitudinal axis, that is to say the axis of rotation.

9. Coupling according to any one of the preceding claims, characterized in that it consists of a vehicle steering universal joint jaw.
